# EUROPEAN PATENT SPECIFICATION

(11) **EP 4 360 946 B1**
(45) Date of publication and mention of the grant of the patent: **19.02.2025**
(21) Application number: 22203238.5
(22) Date of filing: 24.10.2022
(51) Int. Cl.: B60N 2/02, B60W 50/14, B60W 50/16, B60W 60/00

(54) **A SYSTEM USING HAPTIC FEEDBACK FOR INFORMING AN OCCUPANT OF A VEHICLE**
SYSTEM MIT HAPTISCHER RÜCKMELDUNG ZUR INFORMATION EINES FAHRZEUGINSASSEN
SYSTÈME UTILISANT UNE RÉTROACTION HAPTIQUE POUR INFORMER UN OCCUPANT D'UN VÉHICULE

(43) Date of publication of application: 01.05.2024
(73) Proprietor: TOYOTA JIDOSHA KABUSHIKI KAISHA, Aichi-Ken 471-8571 (JP)
(72) Inventor: GENTNER, Alexandre, 1140 BRUSSELS (BE); MASTOUR, Mariam, 9220 AALBORG (DK)
(74) Representative: Cabinet Beau de Loménie

(56) References cited:
- DE-A1- 102013 020 933
- DE-A1- 102013 211 721
- FR-A1- 3 084 029

## Description

### TECHNICAL FIELD

The present invention relates to the field of vehicles, in particular vehicles with a driving-assistance system or automotive vehicles, and more particularly to a system for informing an occupant of a vehicle of upcoming changes in vehicle travel using haptic feedback.

### TECHNOLOGICAL BACKGROUND

Visual cues on the vehicle's interior panels have been extensively used to convey longitudinal motion. For example, patent document US 2018/0086258 A1 relates to a lighting device having dynamic lighting effects to simulate the scrolling of the road inside a vehicle passenger compartment and aiming to restore a sensation of speed to the occupants of the vehicle. However, visual cues, as well as audio cues, are not fully effective as visual attention may be engaged elsewhere in an activity.

Haptic feedback has also been used to communicate navigational cues to the driver. FR 3 084 029 A1, DE 10 2013 020933 A1 and DE 10 2013 211721 A1 disclose examples of vehicles with haptic systems. However, existing systems do not allow conveying information to the occupants of the vehicle in an optimal manner, in particular in case of changes in vehicle travel, which can decrease passenger comfort. Therefore, there is a need for a new system for informing an occupant of a vehicle of upcoming changes in vehicle travel.

### SUMMARY

In order to at least substantially remedy the above-mentioned drawbacks, the present invention relates to a system for informing an occupant of a vehicle of upcoming changes in vehicle travel using haptic feedback, the system as defined in claim 1 comprising:
- a seat motor comprising a plurality of actuators, that is configured to be disposed within a seat of the vehicle and to provide haptic feedback to the occupant,
- a driving-assistance system, and
- a control unit configured to receive acceleration information from the driving-assistance system about upcoming acceleration or deceleration of the vehicle and to control the seat motor, wherein the control unit is configured to sequentially actuate the actuators of the seat motor with a pattern that is determined on the basis of the acceleration information received by the control unit to provide haptic feedback to the occupant prior to the acceleration or deceleration of the vehicle, the system comprises a plurality of rows of actuators, wherein the control unit is configured to actuate successively each row in sequence, a pattern comprising one actuation of each of the rows, wherein the acceleration information received by the control unit from the driving-assistance system has a direction and a magnitude, and wherein a direction of actuation of the rows when the acceleration information is positive acceleration is opposite to a direction of actuation of the rows when the acceleration information is negative acceleration.

An occupant of a vehicle is a person sitting in the passenger compartment, which is a compartment of the vehicle in which any occupant, including the driver and/or non-driving passengers, is supposed to travel.

In a known manner, a driving-assistance system is an electronic device using automated technology that assists drivers in driving and parking functions for increasing car and road safety, by way of sensors and cameras. Thus, it is understood that the present invention relates to a situation in which longitudinal driving-assistance system is on, such as intelligent speed assistance or adaptive cruise control. In other words, the change in vehicle travel is not initiated by the driver, but by the driving-assistance system.

It is understood by "haptic feedback" that the seat motor, in particular the actuators disposed within the seat are tactile actuators involving movements such as vibrations that the occupant sitting on the seat can physically feel, thus conveying information to the occupant.

The acceleration information is information about the acceleration of the vehicle in which the system is mounted. The acceleration information includes at least a direction or a magnitude of the vector representing this acceleration. As used herein, acceleration is a generic term including acceleration strictly speaking (i.e. positive acceleration) as well as deceleration (i.e. negative acceleration), in any direction, including longitudinal (forwards or backwards) or lateral (towards right or left) directions or a combination thereof. Generally speaking, acceleration is the derivative of speed.

In case of predetermined speed for example, input in the driving-assistance system, the driving-assistance system will trigger acceleration, for example after a break, in order to reach the predetermined speed. According to the present invention, based on the knowledge of the upcoming acceleration, the control unit actuates the seat motor prior to the actual start of the acceleration.

Thus, the cue, in particular the haptic feedback, is activated before the vehicle's acceleration which allows the occupant (the driver or a passenger), to prepare for the effect of G-force. In addition, the sequential actuation of the actuators allows to form patterns that can be adapted according to the information received by the control unit, for example the strength or the direction of the acceleration. Therefore, patterns can be used to intuitively and accurately present information regarding upcoming acceleration or other changes in vehicle travel.

The present invention thus allows improving vehicle occupant comfort, by efficiently assisting the occupant to anticipate and to take remedial action upon the activation of haptic cue, for example by adapting its position in the seat. Haptic feedback can also decrease cognitive demand in navigation. Additionally, haptic cue that reflects the vehicle's longitudinal motion (acceleration) may reduce motion sickness.

Preferably, the control unit is configured to actuate the seat motor 0.5 to 2.5 seconds (s) before change in vehicle travel starts. This allows improving timing and giving to the occupant just the time necessary to anticipate and to take remedial action upon the activation of haptic cue before the change in vehicle travel starts.

Preferably, the seat motor is disposed within at least one of the seat cushion or the seat back.

Preferably, each row of the plurality of rows comprises at least two actuators. Preferably, a row is an arrangement in which the actuators that composed the row are aligned in a width direction of the seat, which is a width direction of the vehicle in which the seat is mounted. A row may include two, three or more actuators. This arrangement allows applying tactile feelings to the occupant on a wider region of the seat, so that the occupant can obtain a more perceptive haptic feedback. The system's efficiency is thus improved.

Preferably, the rows are disposed one behind the other in the seat in a front-rear direction of the vehicle in which the seat is mounted. It is to be noted that when the actuators are disposed in the seat back (in place or in addition to the seat cushion), the front-rear direction corresponds to the bottom-up direction of the seat back. In other words, when the actuators are disposed both in the seat back and in the seat cushion, a front end of the seat in the front-rear direction corresponds to a front portion of the seat cushion, while a rear end corresponds to an upper portion of the seat back. Thus, a first row may be disposed at the front end, while second and subsequent rows are disposed behind the first row in the front rear direction, until the last row which may be disposed at the rear end of the seat, the rows being parallel to each other.

Preferably, the actuation of a row involves the simultaneous actuation of each of the actuators constituting the row. Thus, a pattern may correspond to the successive actuation of the rows, from the first row to the last row in the front-rear direction. In addition, haptic feedback may include between 1 to 4 patterns. This allows further improving the tactile perception felt by the occupant, thereby improving efficiency of the system.

Preferably, an actuation of each row is maintained constant for duration comprised between 50 and 750ms.

Preferably, the actuators of the seat motor are vibration motors disposed within a seat back and/or a seat cushion of the seat of the vehicle. In case of several rows disposed one behind the other, the vibrations patterns can be recognized and understood by the occupant(s) in order to allow the occupant(s) to prepare mentally and physically to the change of motion, for example to the acceleration.

Preferably, the actuators of the seat motor are moving parts disposed within a seat back of the seat of the vehicle and configured to provide back pushes on the occupant through displacement of the moving parts and towards back of the occupant. Back pushes are realised by displacement of the moving parts located within the seat back towards the occupant's back, a maximal displacement being for example 10 cm. Back pushes can create a reflex response allowing the occupant to optimise his/her back posture to minimise discomfort during acceleration.

Preferably, the control unit is configured to allow the occupant to adjust the intensity of the haptic feedback. The system may include an interface connected to the control unit, the interface being controllable by the occupant to allow the occupant to adjust the intensity of the haptic feedback, for example the intensity of the vibrations.

The present invention also relates to a vehicle comprising such a system.

The present invention also relates to a method for informing an occupant of a vehicle of upcoming acceleration or deceleration of the vehicle using such a system, the method as defined in claim 7 comprising receiving acceleration information about an upcoming acceleration or deceleration of the vehicle and sequentially actuating the actuators of the seat motor with a pattern that is determined on the basis of the acceleration information received to provide haptic feedback to the occupant prior to the acceleration or deceleration of the vehicle, wherein the acceleration information received has a direction and a magnitude, and wherein a direction of actuation of the rows when the acceleration information is positive acceleration is opposite to a direction of actuation of the rows when the acceleration information is negative acceleration.

The acceleration information received by the control unit from the driving-assistance system may include information about the acceleration vector, in particular the direction of the vector and/or its amplitude. On the basis of this information, the control unit actuates sequentially the actuators with a pattern allowing the occupant to intuitively understand, through the haptic feedback, the information prior to the acceleration. For example, if the upcoming acceleration is small, the actuators may be actuated successively slowly, and if the upcoming acceleration is strong, the actuators may be actuated successively quickly. Alternately, the intensity and/or duration of vibrations in case of vibrating actuators, or the amount of displacement in case of moving parts, may be adapted by the control unit according to the strength of the acceleration. In this sense, preferably, the intensity of the haptic feedback is correlated to the strength of the acceleration.

Preferably, the actuators of the seat motor are vibration motors and the actuating of the seat motor comprises sequentially activating the vibration motors with a pattern that is determined on the basis of at least one of strength or of the acceleration information.

The upcoming acceleration is acquired by the driving-assistance system and provided to the control unit. The control unit thus modulates the pattern of actuation of the vibration motors, on the basis of a magnitude and/or a direction of the upcoming acceleration of the vehicle. In other words, the direction of the upcoming acceleration (upcoming acceleration vector) may be used to determine the manner the motors and the rows have to be successively actuated (for example the right motors of each row if the acceleration vector is directed toward right), and the magnitude of the upcoming acceleration (upcoming acceleration vector) is used to determine the intensity of the vibrations. Therefore, the system provides to the occupant an accurate and intuitive representation of the upcoming acceleration of the vehicle.

Preferably, the pattern is a wave-like vibration pattern. If haptic feedback comprises four patterns for example, four successive wave-like vibration patterns will be produced, each wave-like vibration pattern comprising the successive activation of the rows of actuators disposed within the seat. The intensity and/or the speed of the wave-like vibration pattern may be adjusted according to the strength of the upcoming acceleration. Wave-like vibration pattern provides to the occupant a more accurate and intuitive representation of the upcoming acceleration of the vehicle.

Preferably, the actuators of the seat motor are moving parts, and the actuating of the seat motor comprises sequential displacement of the moving parts towards the occupant's back to provide back pushes to the occupant, with a pattern that is determined on the basis of at least one of strength or timing of the acceleration information.

Preferably, the seat motor is actuated 0.5 to 2.5s before acceleration or deceleration of the vehicle starts.

Not according to the present invention, there may be a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

### BRIEF DESCRIPTION OF THE DRAWINGS

The invention and advantages thereof will be better understood upon reading the detailed description which follows, of embodiments given as non-limiting examples. This description refers to the appended drawings, wherein:
- Fig. 1 shows a side view of a vehicle with a system according to the invention;
- Fig. 2 is a diagram representing a system according to the invention;
- Fig. 3 is a diagram representing components of acceleration information;
- Fig. 4A-4C are perspective views of a seat of the vehicle into which vibration motors of the system are disposed according to different arrangements;
- Fig. 5 represents, according to the present invention, an embodiment of pattern of actuation of the vibration motors according to the arrangement of Fig. 4C;
- Fig. 6 illustrates the variation of the intensity of vibration of the vibration motors in a pattern as a function of time;
- Fig. 7 represents a modified example of the embodiment, with a perspective view of a seat of the vehicle into which moving parts of the system are disposed.

### DETAILED DESCRIPTION OF EMBODIMENTS

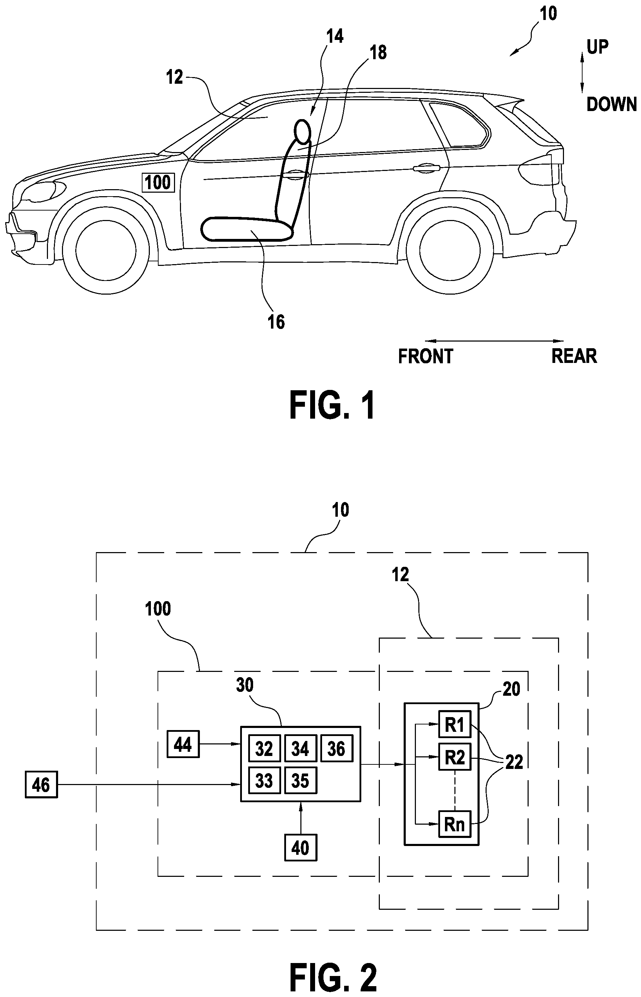

A vehicle 10 comprising a system 100 according to the present invention is shown in Fig. 1. The vehicle 10 is a car with a driving-assistance system 40. The vehicle may be also an automotive vehicle. The vehicle has a vehicle passenger compartment 12, in which at least one occupant, such as a driver or a non-driving passenger, may travel. The vehicle 10 comprises seats 14 (for example driver's seat in Fig. 1) disposed inside the vehicle passenger compartment 12, in which an occupant can sit. Each seat 14 comprises a seat cushion 16 and a seat back 18.

A front-rear direction corresponds to a front-rear direction of the vehicle 10, and an up-down direction corresponds to an up-down direction of the vehicle 10.

The vehicle 10 comprises the system 100 according to the present invention, for informing an occupant of the vehicle 10 of upcoming acceleration or deceleration of the vehicle using haptic feedback, as will be explained hereafter.

The system 100 for a vehicle passenger compartment according to an embodiment is diagrammatically shown in Fig. 2. The system 100 may be provided in the vehicle 10 and be used for the vehicle passenger compartment 12. The system 100 comprises the driving-assistance system 40 of the vehicle. The driving-assistance system 40 allows for example intelligent speed assistance. In this case, the driver input a predetermined speed to the driving-assistance system 40. The driving-assistance system 40 thus maintains speed at the predetermined value, by decelerating in case of obstacle (for example another vehicle) in front of the vehicle 10, and by triggering acceleration in order to reach the predetermined speed when the obstacle is gone. It is understood that the driving-assistance system 40 comprises sensors (not illustrated) such as cameras mounted on the vehicle 10.

The system 100 further comprises a control unit 30 configured to receive acceleration information about the vehicle 10 from the driving-assistance system 40.

The control unit 30 may be an electrical control unit (ECU). The control unit 30 may have the hardware architecture of a computer, as diagrammatically illustrated in Fig. 2. The control unit 30 may comprise a processor 32, a read-only memory (ROM) 33, a random access memory (RAM) 34, a non-volatile memory 35 and communications means 36 for communicating with other components, such as the seat motor 20, wirelessly or in wired manner.

The ROM 33 forms a recording medium that can be read by the processor 32 and on which can be recorded a computer program having instructions for executing the steps of a method for informing an occupant of a vehicle of upcoming acceleration, which will be described later on.

The acceleration information received by the control unit 30 from the driving-assistance system 40 has a direction and a magnitude.

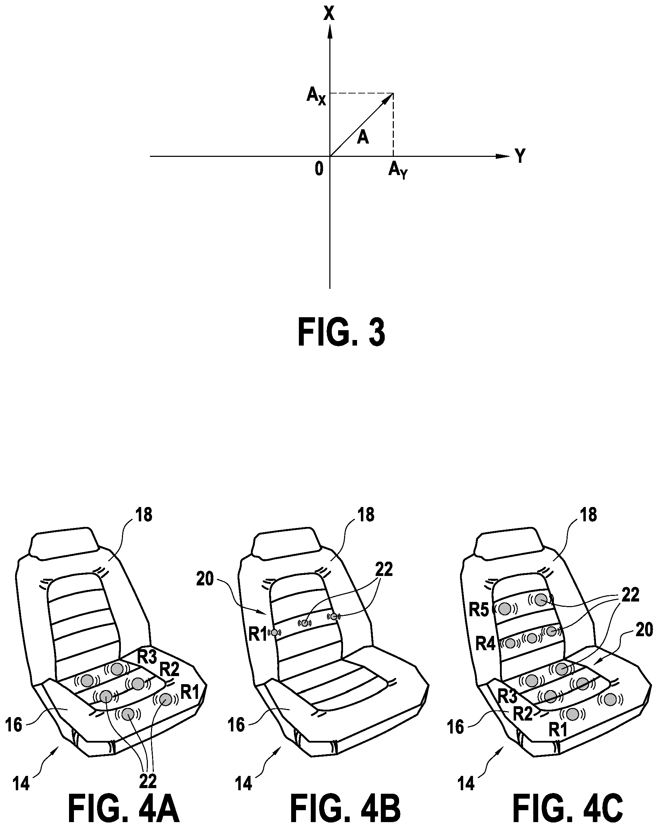

Figure 3 is a diagram in which X represents the longitudinal direction, corresponding to the front-rear direction of the vehicle 10, and Y represents the lateral direction, corresponding to the width direction of the vehicle 10 which is perpendicular to the front-rear direction. On this diagram, the acceleration information A can be represented as a vector A, the direction of the vector A corresponding to the direction of the acceleration information and the length of the vector corresponding to a quantity associated with the acceleration information, such as the acceleration magnitude.

In Fig. 3, positive X represents positive acceleration forwards, e.g. an acceleration when driving forwards or a deceleration when driving backwards. A positive acceleration may be induced by an intelligent speed assistant of the driving-assistance system 40 and/or a restart assistant (e.g. when the preceding vehicle moves again in a stop & go traffic, or when a traffic light becomes green). Conversely, negative X represents negative acceleration forwards, e.g. a deceleration when driving forwards or acceleration when driving backwards. A negative acceleration may be induced the intelligent speed assistant, when the preceding vehicle decelerates for example.

Positive Y represents a right turn and negative Y represents a left turn. The actuation of the seat motor 20 described hereinafter is made with a pattern determined on the basis of the longitudinal and/or lateral components of the acceleration information. Namely, the acceleration information is decomposed into a longitudinal component Ax and a lateral component Ay. More generally, the control unit 30 is configured to determine the pattern on the basis of at least one of a longitudinal component Ax and a lateral component Ay of the direction of the acceleration information A.

The system 100 comprises a seat motor 20 including a plurality of actuators 22 disposed within the seat cushion 16 and/or the seat back 18. In a first example of the embodiment, the actuators are vibration motors. The vibration motors 22 are arranged within the seat cushion 16 and/or the seat back 18 in rows R1-Rn, n being a natural number greater than or equal to 1, a row Rn comprising at least two vibration motors 22. The vibration motors 22 of each row Rn are aligned with each other in the width direction of the vehicle 10. In addition, the rows Rn are spaced from each other in the front-rear direction of the vehicle 10. More specifically, the rows disposed in the seat cushion 16 are spaced from each other in the front-rear direction of the vehicle 10, and the rows disposed in the seat back 18 are spaced from each other in the up-down direction of the vehicle 10.

Fig. 4A-4C represent different examples of arrangements of the vibration motors 22 within the seat. In Fig. 4A, the system 100 comprises three rows R1-R3 of vibration motors 22 disposed within the seat cushion 16, each row comprising two vibration motors 22. In Fig. 4B, the system 100 comprises a single row R1 of vibration motors 22 disposed within the seat back 18, the row R1 comprising three vibration motors 22. In Fig. 4C, the system 100 comprises five rows R1-R5 of vibration motors 22, three rows R1-R3 being disposed within the seat cushion 16 and comprising two vibration motors 22, and two rows R4-R5 being disposed within the seat back 18, a first row R4 comprising three vibration motors 22 and a second row R5 comprising two vibration motors 22. Disposing three vibration motors 22 instead of two in row R4, corresponding to a lumbar region of the occupant sitting in the seat 14 which may be more sensitive than other regions, allows improving tactile perception of the occupant, thereby improving efficiency of the transmission of information.

Upon receiving information from the driving-assistance system 40 about an upcoming acceleration, the control unit 30 controls the seat motor 20 by sequentially actuating the vibration motors 22 with a pattern that is determined on the basis of the acceleration information received by the control unit 30 to provide haptic feedback to the occupant, prior to the effective start of the acceleration, preferably between 0.5 and 2.5 sec before the acceleration starts.

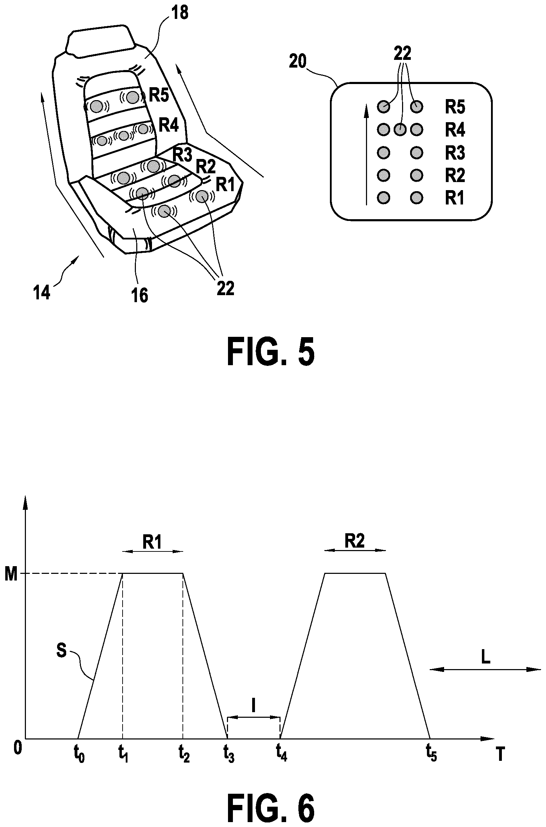

Fig. 5 represents, according to the present invention, an embodiment of vibration pattern to convey information about the upcoming acceleration, on the basis of the arrangement of the vibration motors 22 illustrated in Fig. 4C comprising five rows R1 to R5. In this example, the control unit 30 sequentially actuates the rows, from the first row R1 disposed in a first end, which is in a front end region of the seat cushion 16, to the fifth row R5 disposed in a second end, which is in an upper end region of the seat back 18. More generally, the control unit 30 sequentially actuates the rows, from the first row R1 to the last row Rn, where n is the number of rows. The arrows in Fig. 5 represent a direction of actuation of the rows from R1 to R5, in case of positive acceleration (positive X). However, the direction of actuation of the rows is from R5 to R1 in case of negative acceleration (negative X), in other words in case of upcoming deceleration.

In this example, the actuation of a row means the simultaneous actuation of the vibration motors 22 composing the row. In the arrangement of Fig. 5 for instance, the actuation of the fourth row R4 means the actuation of the three vibration motors 22 composing this row. However, this example is not limitative, and the pattern may differ depending on the acceleration information received by the control unit 30, in particular on the basis of at least one of strength or timing of the acceleration information.

For example, in case the acceleration vector A presents positive Y (Fig. 3), representing a right turn, the control unit 30 may actuate only the vibration motor 22 disposed furthest to the right of each row in the width direction of the vehicle 10. In the same manner, in case the acceleration vector A presents negative Y, representing a left turn, the control unit 30 may actuate only the vibration motor 22 disposed furthest to the left of each row in the width direction of the vehicle 10.

Furthermore, in case of an acceleration vector A with a high magnitude, meaning a high strength of the upcoming acceleration, the control unit 30 may accelerate the sequential actuation of the vibration motors 22, that is reducing the time lapse between the actuation of two successive rows, and/or actuate each row with a higher intensity of vibrations. In the same manner, in case of an acceleration vector A with a low magnitude, meaning a low strength of the upcoming acceleration, the control unit 30 may slow down the sequential actuation of the vibration motors 22, that is increasing the time lapse between the actuation of two successive rows, and/or actuate each row with a lower intensity of vibrations.

In other words, patterns are determined by the control unit 30 to intuitively and accurately present information to the occupant regarding upcoming acceleration or other changes in vehicle travel.

In a method for informing an occupant of a vehicle of upcoming acceleration using the system 100, the control unit 30 firstly receives information from the driving-assistance system 40 about an upcoming acceleration of the vehicle 10, and secondly sequentially actuates the vibration motors 22 of the seat motor 20 with a pattern that is determined on the basis of the information received to provide haptic feedback to the occupant prior to the acceleration.

Fig. 6 represents the variation of the intensity of vibrations during a pattern as a function of time T, in a case of a system 100 comprising two rows R1 and R2 of vibration motors 22. In a time lapse between 0.5 and 2.5 sec before the acceleration starts, and after receiving information from the driving-assistance system 40, the control unit 30 actuates the first row R1 at a time t₀. The slope S, which is the time for the vibration motors 22 of the row R1 to reach a maximum intensity of vibrations M from t₀ is between 0 and 300 ms. Once the maximum intensity of vibration M has been reached at time t₁, the first row R1 then remains constant at this maximum intensity of vibration M during a time lapse between 50 and 750 ms, until time t₂. Then, the vibration of row R1 decreases from t₂ to t₃.

The second row R2, which is disposed behind the first row R1 in the front-rear direction of the vehicle 10, is then actuated by the control unit 30 at time t₄, and follows the same variation as the first row R1. An inter-delay I, between the end of the actuation of R1 and the actuation of R2, namely between t₃ and t₄, is between 100 and 200 ms. The pattern is finished when the second row R2 is deactivated at time t₅.

The amount of pattern loops, that is the number of time the above described pattern is realized, may be between 1 and 4, depending on the number of rows and on the timing when the acceleration starts. For example, when the system 100 comprises one or two rows as described above, the actuation process may include four loops. On the other hands, when the system 100 comprises five rows, the actuation process may include only one loop. When the actuation process includes several loops, a delay L between two patterns, namely between t₅ and a new time t₀ of actuation of the first row R1, is between 500 and 1000 ms. In this case, the acceleration information is conveyed via a wave-like vibration pattern.

The control unit 30 may determine the above parameters on the basis of the acceleration vector A, while remaining within the above ranges. For examples, in case of an acceleration vector with a high magnitude, the control unit 30 may reduce the inter delay I between actuation of two rows, by setting an inter delay I closer to the lower boundary 100 ms of the above range than the upper boundary 200 ms. In the same manner, in case of an acceleration vector with a low magnitude, the control unit 30 may increase the inter delay I between actuation of two rows, by setting an inter delay I closer to the upper boundary 200 ms of the above range than the lower boundary 100 ms, or by setting a maximum intensity of vibrations lower than M.

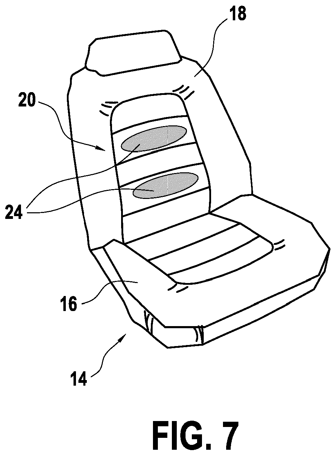

Fig. 7 represents a second example of the embodiment, wherein the vibrations motors 22 are replaced by moving parts 24 located within the seat back 18. In this example, moving parts 24 are disposed within the seat back 18, at a region of the chest back of the occupant, and at a lumbar region of the occupant. In this case, the control unit 30 is configured to sequentially actuate the moving parts 24 to cause displacement of the moving parts 24 towards the occupant's back to provide back pushes to the occupant. The moving parts 24 are actuated by the control unit 30 with a pattern that is determined on the basis of at least one of strength or timing of the acceleration information, in the same manner as with the vibration motors 22. For example, the motor located at the lumber region of the occupant may include several moving parts 24 in a row, and the actuation of these moving parts 24 (actuation of the moving part disposed furthest to the right or to the left, or amount of displacement of the moving part) may depend on the direction and/or the magnitude of the acceleration vector A.

In this example, the moving parts 24 are also actuated 0.5-2.5s before acceleration starts. A maximum displacement of the moving parts 24 may be 100 mm, and a total duration of a pattern is lower than 5 sec. It is to be noted that although the actuation of the moving parts 24 (in the same manner as for the vibration motors 22) starts 0.5-2.5s before acceleration starts, the pattern, or the following patterns when the process includes several loops, may overlap the beginning of acceleration. The fact that the actuation of the seat motor 20 starts 0.5-2.5s before acceleration starts allows the occupant (driver or passenger) to anticipate the acceleration.

The system 100 may also allow the occupants of the vehicle 10 to control parameters of the seat motor 20, for example for adjusting the intensity of the haptic feedback, for instance the intensity of the vibrations, namely the maximum intensity M of vibrations of the vibration motors 22, or the maximum displacement of the moving parts 24. In view of that, the system 100 may comprise an interface, such as an in-vehicle interface 44, or a remote interface 46 such as a smartphone application. The interface may be a graphical user interface (GUI).

Although the present invention refers to specific exemplary embodiments, modifications may be provided as long as they remain within the scope of the appended claims. Therefore, the description and the drawings should be considered in an illustrative rather than in a restrictive sense.

## Claims

1. A system (100) for informing an occupant of a vehicle (10) of upcoming acceleration or deceleration of the vehicle using haptic feedback, the system comprising:
- a seat motor (20) comprising a plurality of actuators (22, 24), that is configured to be disposed within a seat (14) of the vehicle and to provide haptic feedback to the occupant,
- a driving-assistance system (40), and
- a control unit (30) configured to receive acceleration information from the driving-assistance system (40) about upcoming acceleration or deceleration of the vehicle and to control the seat motor (20), wherein the control unit (30) is configured to sequentially actuate the actuators (22, 24) of the seat motor (20) with a pattern that is determined on the basis of the acceleration information received by the control unit (30) to provide haptic feedback to the occupant prior to the acceleration or deceleration of the vehicle, the system comprising a plurality of rows of actuators (22, 24), wherein the control unit (30) is configured to actuate successively each row in sequence, a pattern comprising one actuation of each of the rows, **characterized in that** the acceleration information received by the control unit (30) from the driving-assistance system (40) has a direction and a magnitude, and **in that** a direction of actuation of the rows when the acceleration information is positive acceleration is opposite to a direction of actuation of the rows when the acceleration information is negative acceleration.

2. The system (100) according to claim 1, wherein the control unit (30) is configured to actuate the seat motor (20) 0.5 to 2.5s before acceleration or deceleration of the vehicle starts.

3. The system (100) according to claim 1 or 2, wherein each row of the plurality of rows comprises at least two actuators (22, 24).

4. The system (100) according to any of claims 1 to 3, wherein an actuation of each row is maintained constant for duration comprised between 50 and 750 ms.

5. The system (100) according to any of claims 1 to 4, wherein the actuators of the seat motor (20) are vibration motors (22) disposed within a seat back (18) and/or a seat cushion (16) of the seat (14) of the vehicle (10).

6. The system (100) according to any of claims 1 to 4, wherein the actuators of the seat motor (20) are moving parts (24) disposed within a seat back (18) of the seat (14) of the vehicle (10) and configured to provide back pushes on the occupant through displacement of the moving parts (24) and towards back of the occupant.

7. A method for informing an occupant of a vehicle (10) of upcoming acceleration or deceleration of the vehicle using a system according to any one of claims 1 to 6, the method comprising receiving acceleration information about an upcoming acceleration or deceleration of the vehicle and sequentially actuating the actuators (22, 24) of the seat motor (20) with a pattern that is determined on the basis of the acceleration information received to provide haptic feedback to the occupant prior to the acceleration or deceleration of the vehicle, **characterized in that** the acceleration information received has a direction and a magnitude, and **in that** a direction of actuation of the rows when the acceleration information is positive acceleration is opposite to a direction of actuation of the rows when the acceleration information is negative acceleration.

8. The method according to claim 7, wherein the actuators of the seat motor (20) are vibration motors (22) and the actuating of the seat motor (20) comprises sequentially activating the vibration motors (22) with a pattern that is determined on the basis of at least one of strength or timing of the acceleration information.

9. The method according to claim 8, wherein the pattern is a wave-like vibration pattern.

10. The method according to claim 7, wherein the actuators of the seat motor (20) are moving parts (24), and the actuating of the seat motor (20) comprises sequential displacement of the moving parts (24) towards the occupant's back to provide back pushes to the occupant, with a pattern that is determined on the basis of at least one of strength or timing of the acceleration information.

11. The method according to any one of claims 7 to 10, wherein the seat motor (20) is actuated 0.5 to 2.5s before acceleration or deceleration of the vehicle starts.

## Patentansprüche

1. System (100) zur Information eines Fahrzeuginsassen (10) über eine bevorstehende Beschleunigung oder Verlangsamung des Fahrzeugs mit haptischer Rückmeldung, wobei das System Folgendes umfasst:
- einen Sitzmotor (20), umfassend eine Vielzahl von Aktuatoren (22, 24), der konfiguriert sind, um innerhalb eines Sitzes (14) des Fahrzeugs angeordnet zu sein und dem Insassen eine haptische Rückmeldung bereitzustellen,
- ein Fahrassistenzsystem (40), und
- eine Steuereinheit (30), die konfiguriert ist, um Beschleunigungsinformationen von dem Fahrassistenzsystem (40) über eine bevorstehende Beschleunigung oder Verlangsamung des Fahrzeugs zu empfangen und den Sitzmotor (20) zu steuern, wobei die Steuereinheit (30) konfiguriert ist, um aufeinanderfolgend die Aktuatoren (22, 24) des Sitzmotors (20) mit einem Muster zu betätigen, das auf der Basis der Beschleunigungsinformationen bestimmt wird, die von der Steuereinheit (30) empfangen werden, und dem Insassen vor der Beschleunigung oder Verlangsamung des Fahrzeugs eine haptische Rückmeldung bereitzustellen, wobei das System eine Vielzahl von Reihen von Aktuatoren (22, 24) umfasst,
wobei die Steuereinheit (30) konfiguriert ist, um aufeinanderfolgend jede Reihe in Sequenz zu betätigen, wobei ein Muster eine Betätigung jeder der Reihen umfasst, **dadurch gekennzeichnet, dass** die Beschleunigungsinformationen, die von der Steuereinheit (30) von dem Fahrassistenzsystem (40) empfangen wurden, eine Richtung und eine Größe aufweisen, und dadurch, dass eine Richtung der Betätigung der Reihen, wenn die Beschleunigungsinformationen eine positive Beschleunigung bedeuten, entgegengesetzt einer Richtung der Betätigung der Reihen ist, wenn die Beschleunigungsinformationen eine negative Beschleunigung bedeuten.

2. System (100) nach Anspruch 1, wobei die Steuereinheit (30) konfiguriert ist, um den Sitzmotor (20) 0,5 bis 2,5s vor dem Beginn der Beschleunigung oder der Verlangsamung des Fahrzeugs zu betätigen.

3. System (100) nach Anspruch 1 oder 2, wobei jede Reihe der Vielzahl von Reihen mindestens zwei Aktuatoren (22, 24) umfasst.

4. System (100) nach einem der Ansprüche 1 bis 3, wobei eine Betätigung jeder Reihe für eine Dauer im Bereich zwischen 50 und 750 ms konstant gehalten wird.

5. System (100) nach einem der Ansprüche 1 bis 4, wobei die Aktuatoren des Sitzmotors (20) Vibrationsmotoren (22) sind, die innerhalb einer Rückenlehne (18) und/oder eines Sitzkissens (16) des Sitzes (14) des Fahrzeugs (10) angeordnet sind.

6. System (100) nach einem der Ansprüche 1 bis 4, wobei die Aktuatoren des Sitzmotors (20) bewegliche Teile (24) sind, die innerhalb einer Rückenlehne (18) des Sitzes (14) des Fahrzeugs (10) angeordnet und konfiguriert sind, um Rückschiebungen auf den Insassen durch die Verschiebung der beweglichen Teile (24) und hin zum Rücken des Insassen bereitzustellen.

7. Verfahren zur Information eines Fahrzeuginsassen (10) über eine bevorstehende Beschleunigung oder Verlangsamung des Fahrzeugs mit einem System nach einem der Ansprüche 1 bis 6, wobei das Verfahren das Empfangen von Beschleunigungsinformationen über eine bevorstehende Beschleunigung oder Verlangsamung des Fahrzeugs und aufeinanderfolgend das Betätigen der Aktuatoren (22, 24) des Sitzmotors (20) mit einem Muster umfasst, das auf der Basis der Beschleunigungsinformationen bestimmt wird, die empfangen werden, um dem Insassen vor der Beschleunigung oder der Verlangsamung des Fahrzeugs eine Rückmeldung bereitzustellen, **dadurch gekennzeichnet, dass** die empfangenen Beschleunigungsinformationen eine Richtung und eine Größe aufweisen, und dadurch, dass eine Richtung der Betätigung der Reihen, wenn die Beschleunigungsinformationen eine positive Beschleunigung bedeuten, entgegengesetzt einer Richtung der Betätigung der Reihen ist, wenn die Beschleunigungsinformationen eine negative Beschleunigung bedeuten.

8. Verfahren nach Anspruch 7, wobei die Aktuatoren des Sitzmotors (20) Vibrationsmotoren (22) sind und die Betätigung des Sitzmotors (20) aufeinanderfolgend das Aktivieren des Vibrationsmotors (22) mit einem Muster umfasst, das auf der Basis von mindestens einem von Kraft oder Timing der Beschleunigungsinformationen bestimmt wird.

9. Verfahren nach Anspruch 8, wobei das Muster ein wellenartiges Vibrationsmuster ist.

10. Verfahren nach Anspruch 7, wobei die Aktuatoren des Sitzmotors (20) bewegliche Teile (24) sind und die Betätigung des Sitzmotors (20) eine aufeinanderfolgende Verschiebung der beweglichen Teile (24) hin zum Rücken des Insassen umfasst, um Rückschiebungen zu dem Insassen mit einem Muster bereitzustellen, das auf der Basis von mindestens einem von Kraft oder Timing der Beschleunigungsinformationen bestimmt wird.

11. Verfahren nach einem der Ansprüche 7 bis 10, wobei der Sitzmotor (20) 0,5 bis 2,5s vor dem Beginn der Beschleunigung oder Verlangsamung des Fahrzeugs betätigt wird.

## Revendications

1. Système (100) destiné à informer un occupant d'un véhicule (10) de l'accélération ou de la décélération imminente du véhicule à l'aide d'une rétroaction haptique, le système comprenant :
- un moteur de siège (20) comprenant une pluralité d'actionneurs (22, 24), qui sont configurés pour être disposés dans un siège (14) du véhicule et pour fournir une rétroaction haptique à l'occupant,
- un système d'aide à la conduite (40), et
- une unité de commande (30) configurée pour recevoir des informations d'accélération de la part du système d'aide à la conduite (40) relatives à l'accélération ou à la décélération imminente du véhicule et pour commander le moteur de siège (20), dans lequel l'unité de commande (30) est configurée pour activer de façon séquentielle les actionneurs (22, 24) du moteur de siège (20) selon un schéma qui est déterminé sur la base des informations d'accélération reçues par l'unité de commande (30) afin de fournir une rétroaction haptique à l'occupant avant l'accélération ou la décélération du véhicule, le système comprenant une pluralité de rangées d'actionneurs (22, 24),
dans lequel l'unité de commande (30) est configurée pour activer successivement chaque rangée en séquence, un schéma comprenant l'activation de chacune des rangées, **caractérisé en ce que** les informations d'accélération reçues par l'unité de commande (30) de la part du système d'aide à la conduite (40) comprennent une direction et une magnitude, et **en ce qu'**une direction d'activation des rangées lorsque les informations d'accélération indiquent une accélération positive est opposée à une direction d'activation des rangées lorsque les informations d'accélération indiquent une accélération négative.

2. Système (100) selon la revendication 1, dans lequel l'unité de commande (30) est configurée pour activer le moteur de siège (20) 0,5 à 2,5 secondes avant que l'accélération ou la décélération du véhicule ne démarre.

3. Système (100) selon la revendication 1 ou 2, dans lequel chaque rangée de la pluralité de rangées comprend au moins deux actionneurs (22, 24).

4. Système (100) selon l'une quelconque des revendications 1 à 3, dans lequel une activation de chaque rangée est maintenue constante pendant une durée comprise entre 50 et 750 ms.

5. Système (100) selon l'une quelconque des revendications 1 à 4, dans lequel les actionneurs du moteur de siège (20) sont des moteurs à vibration (22) disposés dans un dossier de siège (18) et/ou un coussin de siège (16) du siège (14) du véhicule (10).

6. Système (100) selon l'une quelconque des revendications 1 à 4, dans lequel les actionneurs du moteur de siège (20) sont des pièces en mouvement (24) disposées dans un dossier de siège (18) du siège (14) du véhicule (10) et configurées pour exercer des poussées dorsales sur l'occupant par déplacement des pièces en mouvement (24) et vers le dos de l'occupant.

7. Procédé destiné à informer un occupant d'un véhicule (10) de l'accélération ou de la décélération imminente du véhicule à l'aide d'un système selon l'une quelconque des revendications 1 à 6, le procédé comprenant la réception d'informations d'accélération relatives à une accélération ou décélération imminente du véhicule et l'activation séquentielle des actionneurs (22, 24) du moteur de siège (20) selon un schéma qui est déterminé sur la base des informations d'accélération reçues afin de fournir une rétroaction haptique à l'occupant avant l'accélération ou la décélération du véhicule, **caractérisé en ce que** les informations d'accélération comprennent une direction et une magnitude, et **en ce qu'**une direction d'activation des rangées lorsque les informations d'accélération indiquent une accélération positive est opposée à une direction d'activation des rangées lorsque les informations d'accélération indiquent une accélération négative.

8. Procédé selon la revendication 7, dans lequel les actionneurs du moteur de siège (20) sont des moteurs à vibration (22) et l'activation du moteur de siège (20) comprend l'activation séquentielle des moteurs à vibration (22) selon un schéma qui est déterminé sur la base d'au moins l'un d'une intensité ou d'un moment des informations d'accélération.

9. Procédé selon la revendication 8, dans lequel le schéma est un schéma de vibrations sous forme d'ondes.

10. Procédé selon la revendication 7, dans lequel les actionneurs du moteur de siège (20) sont des pièces en mouvement (24), et l'activation du moteur de siège (20) comprend le déplacement séquentiel des pièces en mouvement (24) vers le dos de l'occupant afin d'exercer des poussées dorsales sur l'occupant, selon un schéma qui est déterminé sur la base d'au moins l'un d'une intensité ou d'un moment des informations d'accélération.

11. Procédé selon l'une quelconque des revendications 7 à 10, dans lequel le moteur de siège (20) est activé entre 0,5 et 2,5 secondes avant que l'accélération ou la décélération du véhicule ne démarre.
